(19) Europäisches Patentamt / European Patent Office / Office européen des brevets

(11) **EP 2 713 701 B1**

(12) **EUROPÄISCHE PATENTSCHRIFT**

(45) Veröffentlichungstag und Bekanntmachung des Hinweises auf die Patenterteilung:
**31.08.2016 Patentblatt 2016/35**

(21) Anmeldenummer: **11720781.1**

(22) Anmeldetag: **23.05.2011**

(51) Int Cl.:
*A01D 41/00* *(2006.01)*    *G01M 13/04* *(2006.01)*

(86) Internationale Anmeldenummer:
**PCT/EP2011/058351**

(87) Internationale Veröffentlichungsnummer:
**WO 2012/159659 (29.11.2012 Gazette 2012/48)**

(54) **VERFAHREN UND SYSTEM**

METHOD AND SYSTEM

PROCEDE E SYSTEME

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**09.04.2014 Patentblatt 2014/15**

(73) Patentinhaber: **Aktiebolaget SKF**
**415 50 Göteborg (SE)**

(72) Erfinder:
• **KERN-TRAUTMANN, Andreas**
**97230 Estenfeld (DE)**
• **SCHMALBRUCH, Iver**
**97517 Rannungen (DE)**

(74) Vertreter: **Kuhstrebe, Jochen**
**SKF GmbH**
**IA&IP**
**Gunnar-Wester-Straße 12**
**97421 Schweinfurt (DE)**

(56) Entgegenhaltungen:
**EP-A1- 1 495 669      EP-A2- 1 826 735**
**WO-A1-2010/043699   DE-A1- 3 021 506**
**DE-A1- 3 535 428**

EP 2 713 701 B1

**Beschreibung**

Es ist ein Verfahren bekannt, bei welchem eine Sensoreinheit eine Zustandskenngröße eines Wälzlagers sensiert und Daten des Sensierens an wenigstens eine Auswerteinheit sendet, welche die Daten analysiert.

Insbesondere bezieht sich EP 1 495 669 A1 auf eine Ballenpresse, bei der über induktive Sensoren Laufrollen überwacht werden. In diesem Zusammenhang soll eine Warnanzeige an den Bediener erfolgen, wenn wenigstens einer der Sensoren der Laufrollen kein Signal innerhalb von zwei Presskolbenhüben an einen Mikrokontroller abgibt, da dies auf einen Stillstand der betreffenden Laufrollen schließen lasse. Bei einem Unterschreiten der Ist-Drehzahl kann eine Warnmeldung erfolgen, wobei bei Stillstand der Laufrollen zusätzlich eine Alarmmeldung per Funkübertragung an z.B. eine Service-Zentrale abgegeben werden kann.

Die Aufgabe der Erfindung besteht insbesondere darin, eine hohe Effizienz zu erreichen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Es wird ein Verfahren, insbesondere Erntemaschinensteuerungsverfahren, vorgeschlagen, bei welchem eine Sensoreinheit zumindest eine Zustandskenngröße eines Wälzlagers sensiert und Daten des Sensierens an wenigstens eine Auswerteinheit sendet, welche die Daten analysiert, wobei in Abhängigkeit von wenigstens einem Ergebnis, welches bei dem Analysieren erzielt wird, zumindest ein Verfahrensvorgang gestartet wird, wobei der Verfahrensvorgang wenigstens ein Steuern zumindest eines Betriebsparameters einer Erntemaschine (16; 16a, 24a) ist, welches zusammen mit dem Sensieren der Sensoreinheit (10; 10a, 22a) einen Regelkreis bildet. Unter einer "Auswerteinheit" soll insbesondere eine Einheit verstanden werden, welche eine Recheneinheit, eine Speichereinheit und ein in der Speichereinheit gespeichertes Betriebsprogramm aufweist. Unter einem "Analysieren der Daten" durch die Auswerteinheit soll insbesondere verstanden werden, dass die Auswerteinheit aufgrund der Daten vorzugsweise überprüft, ob eine Temperatur des Wälzlagers so hoch ist, dass eine weitere Benutzung des Wälzlagers zu einer Schädigung des Wälzlagers führen würde, und/oder die Auswerteinheit aufgrund der Daten vorzugsweise überprüft, ob an dem Wälzlager Schwingungen, insbesondere in eine radiale Richtung des Wälzlagers, auftreten, aus welchen ein Defekt oder eine Beschädigung des Innenrings und/oder des Außenrings und/oder eines Wälzkörpers und/oder des Wälzkörperkäfigs des Wälzlagers geschlossen werden können. Mit einer erfindungsgemäßen Ausgestaltung kann eine hohe Effizienz erreicht werden. Insbesondere können Maßnahmen gegen eine Überbeanspruchung oder einen drohenden Defekt des Wälzlagers ergriffen werden. Insbesondere kann verhindert werden, dass eine Maschine während eines Betriebsvorgangs, insbesondere eine Erntemaschine während eines Erntevorgangs, durch einen Defekt des Wälzlagers ausfällt, wobei durch das Verhindern Kosten eingespart werden können. Damit kann automatisch ein schonender Betrieb erreicht werden.

Vorzugsweise ist der Verfahrensvorgang wenigstens ein Steuern zumindest eines Betriebsparameters einer Erntemaschine und der zumindest eine Betriebsparameter ist eine Breite eines Gutbeförderungskanals der Erntemaschine und/oder eine Fahrgeschwindigkeit der Erntemaschine. Unter einer "Breite" eines Gutbeförderungskanals soll insbesondere eine in Bezug auf eine gesamte Erstreckungslänge des Gutbeförderungskanals auftretende minimale Breite des Gutbeförderungskanals verstanden werden. Hierdurch können Zustandsgrößen des Wälzlagers effektiv beeinflusst werden.

Mit Vorteil ist der Verfahrensvorgang ein Anzeigevorgang, bei welchem einem Betreiber einer Erntemaschine eine Information über eine Schädigungsgefahr des Wälzlagers angezeigt wird und/oder dem Betreiber wenigstens ein Handlungsvorschlag angezeigt wird, welcher zu einer Senkung einer Schädigungsgefahr des Wälzlagers führt, und/oder dem Betreiber angezeigt wird, wann das Wälzlager voraussichtliche defekt sein wird. Dadurch kann ein das Wälzlager schonender Betrieb erreicht werden.

Vorzugsweise findet das Verfahren in Echtzeit statt. Darunter, dass das Verfahren in "Echtzeit" stattfindet, soll insbesondere verstanden werden, dass das Verfahren innerhalb eines Zeitintervalls von drei Sekunden, vorzugsweise einer Zehntelsekunde und besonders bevorzugt innerhalb von einer hundertstel Sekunde stattfindet. Damit kann ein schneller Schutz des Wälzlagers erreicht werden.

Außerdem wird vorgeschlagen, dass die zumindest eine Zustandskenngröße eine Drehzahl des Wälzlagers und/oder wenigstens eine Vibrationsfrequenz des Wälzlagers und/oder eine Temperatur des Wälzlagers und/oder ein an einem Lagerring des Wälzlagers angreifendes Drehmoment ist. Dadurch kann in einfacher Weise auf drohende oder vorhandene Schäden des Wälzlagers geschlossen werden.

Mit Vorteil ist das Wälzlager ein Teil einer Erntemaschine und es werden weitere Daten von weiteren Sensoreinheiten in weiteren Erntemaschinen analysiert und es wird in Abhängigkeit von zumindest mehreren Analyseergebnissen zu Daten mehrerer Erntemaschinen zumindest ein Signal an wenigstens eine Erntemaschine gesendet. Hierdurch kann ein effizienter simultaner Betrieb mehrerer Erntemaschinen erzielt werden.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Fig. 1 zeigt einen Feldhäcksler, welcher ein erfindungsgemäßes Verfahren durchführt,

Fig. 2 zeigt eine schematische Ansicht eines Schnittgutbeförderungswegs in einem selbstfahrenden Teil des Feldhäckslers, und

Fig. 3 zeigt schematisch eine Einbindung des Feldhäckslers in ein Steuerungsverfahren, das mehrere Erntemaschinen betrifft.

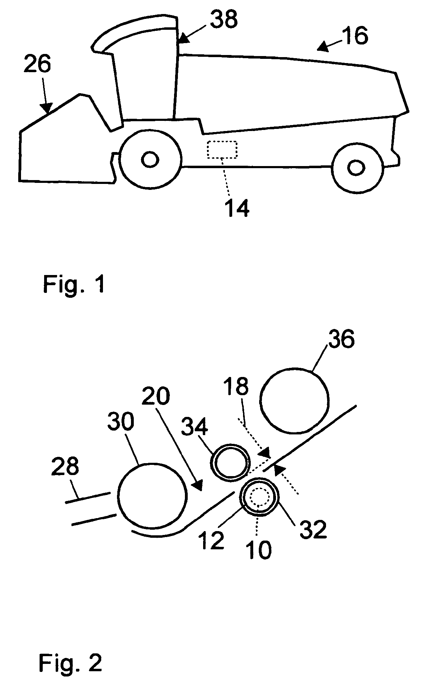

Figur 1 zeigt ein System, welches dazu vorgesehen ist, ein erfindungsgemäßes, in Echtzeit stattfindendes Verfahren durchzuführen. Das System ist eine Erntemaschine 24 und als Feldhäcksler ausgebildet. Die Erntemaschine weist ein Häckselwerk 26 auf, welches dazu vorgesehen ist, Erntegut und insbesondere Maispflanzen häckseln und welches zerstörungsfrei und werkzeuglos von einem selbstfahrenden Teil des Feldhäckslers abkoppelbar ist. Bei einem Betriebsvorgang wird Erntegut durch einen Beförderungskanal 28 einer Schneidwalze 30 zugeführt, welche das zugeführte Erntegut in Scheiben schneidet. Prinzipiell ist denkbar, den Beförderungskanal 28 durch Einzugswalzen zu ersetzen. Die Scheiben gelangen zu einer ersten und einer zweiten Cracker-Walze 32, 34, welche Teil des selbstfahrenden Teil des Feldhäckslers sind und welche dazu vorgesehen sind, insbesondere Maiskörner derart zu komprimieren, dass deren Oberfläche aufplatzt. Ein Abstand der Cracker-Walzen 32, 34 bildet eine minimale Breite 18 eines Gutbeförderungskanals 20, durch welchen das Erntegut transportiert wird. Nachdem das Erntegut die Cracker-Walzen 32, 34 passiert hat gelangt es zu einer Beschleunigerwalze 36, welche das Erntegut derart beschleunigt, dass es in ein Auswurfsrohr (nicht dargestellt) des selbstfahrenden Teils des Feldhäckslers gelangt.

Der selbstfahrende Teil der Erntemaschine weist ein Wälzlager 12 auf, welches die Cracker-Walze 32 lagert. An dem Wälzlager 12 ist eine Sensoreinheit 10 des selbstfahrenden Teils der Erntemaschine angeordnet, welche bei dem Betriebsvorgang eine Drehzahl eines Innenrings des Wälzlagers 12 relativ zu einem Außenring des Wälzlagers 12 misst. Ferner misst die die Sensoreinheit 10 eine Temperatur des Wälzlagers 12 und in radiale Richtungen des Wälzlagers 12 auftretende Schwingungen des Wälzlagers 12, das heißt Amplituden und Frequenzen der Schwingungen. Außerdem misst die Sensoreinheit 10 ein Drehmoment, welches bei dem Betriebsvorgang an dem Wälzlager 12 auftritt. Die Sensoreinheit 10 sendet alle durch ihr Sensieren gewonnenen Daten per Funk an eine Auswerteinheit 14 der Erntemaschine 24. Das Senden der Daten kann auch durch ein Kabel erfolgen. Die Auswerteinheit 14 weist eine Recheneinheit, eine Speichereinheit und ein Betriebsprogramm auf. Die Auswerteinheit 14 analysiert die Daten mit Hilfe eines Algorithmus, der in der Speichereinheit gespeichert ist. Die Auswerteinheit 14 erkennt, wann die Temperatur des Wälzlagers 12 einen kritischen Wert aufweist, welcher bewirken würde, dass bei einem weiteren Betrieb des Wälzlagers 12 mit denselben Betriebsbedingungen ein Schaden des Wälzlagers 12 eintreten würde. Das Erkennen erfolgt dadurch, dass die Auswerteinheit 14 die von der Sensoreinheit 10 sensierte Temperatur mit einer in der Auswerteinheit 14 gespeicherten Temperatur vergleicht. Liegt die sensierte Temperatur über der gespeicherten Temperatur, so liegt der kritische Wert der Temperatur vor. In ähnlicher Weise erfolgt eine Auswertung der durch die Sensoreinheit 10 sensierten Schwingungen durch die Auswerteinheit 14. Das Auswerten der durch die Sensoreinheit 10 sensierten Schwingungen ist Stand der Technik und dem Fachmann bekannt. In der Speichereinheit der Auswerteinheit 14 sind die folgenden Formeln für die sogenannten bearing defect frequencies gespeichert, welche dem Fachmann bekannt sind:

$$BPFO = \frac{n}{60} * z * \frac{D_{pw} - D_{we}\cos\alpha}{2 * D_{pw}}$$

$$BPFI = \frac{n}{60} * z * \frac{D_{pw} + D_{we}\cos\alpha}{2 * D_{pw}}$$

$$BSF = \frac{n}{60} * \frac{D_{pw}^2 - D_{we}^2\cos\alpha}{D_{we} * D_{pw}}, \; BPF = 2 * BSF$$

$$FTF = \frac{n}{60} * \frac{D_{pw} - D_{we}\cos\alpha}{2 * D_{pw}}$$

Hierbei ist n die Geschwindigkeit des Wälzlagers, z die Anzahl der Wälzkörper im Lager, $D_{pw}$ der Wälzkörperkäfigdurchmesser, $D_{we}$ der Wälzkörperdurchmesser und $\alpha$ der Kontaktwinkel. Erkennt die Auswerteinheit 14 in den Daten der Sensoreinheit 10 Frequenzen, welche mit den aus den oben angegebenen Formeln berechneten übereinstimmen, so erkennt die Auswerteinheit 14 kritische Frequenzen. Erkennt die Auswerteinheit 14 kritische Frequenzen, so veranlasst sie, dass in einer optischen Anzeigeeinheit, welche als Bildschirm ausgebildet ist und welche in einem Cockpit 38 (Figur 1) der Erntemaschine 24 angeordnet ist, dem Fahrer der Erntemaschine 24 eine Warnmeldung zur Warnung vor einer Schädigungsgefahr des Wälzlagers 12 angezeigt wird. Ferner zeigt die Anzeigeeinheit einen Handlungsvorschlag an, welcher zu einer Senkung der Schädigungsgefahr führt. Dieser Handlungsvorschlag kann insbesondere sein, die Erntemaschine 24 mit einer kleineren Geschwindigkeit zu fahren. Von den kritischen Frequenzen und einer Intensität der auftretenden kritischen Frequenzen kann die Auswerteinheit 14 in bekannter Weise darauf schließen, wann das Wälzlager 12 bei einem weiteren Betrieb voraussichtlich vollständig defekt und unbenutzbar sein wird. Dies wird dem Fahrer der Erntemaschine durch die Anzeigeeinheit angezeigt.

Erkennt die Auswerteinheit 14 einen kritischen Wert der Temperatur, so veranlasst sie, dass eine Geschwindigkeit, mit welcher die Erntemaschine fährt, reduziert wird. Zusätzlich oder alternativ kann sie veranlassen, dass die Breite 18 vergrößert wird. Ferner kann ein Steuern der Geschwindigkeit durch die Auswerteinheit 14 zusammen mit dem Sensieren der Sensoreinheit 10 einen Regelkreis in der Weise bilden, dass die Temperatur des Wälzlagers 12 durch eine Steuerung der Geschwindigkeit auf einen bestimmten, nicht kritischen Wert geregelt wird. Außerdem kann ein Steuern der Breite 18 durch die Auswerteinheit 14 zusammen mit dem Sensieren der Sensoreinheit 10 einen Regelkreis in der Weise bilden, dass die Temperatur des Wälzlagers 12 durch eine Steuerung der Breite 18 auf einen bestimmten, nicht kritischen Wert geregelt wird. Eine Zeitdauer von einem Sensieren der Sensoreinheit 10 bis zu einem dadurch veranlassten Steuern der Geschwindigkeit ist kleiner als eine halbe Sekunde.

Prinzipiell ist denkbar, dass die Auswerteinheit außerhalb der Erntemaschine in einem Kontrollzentrum angeordnet ist und Daten per Funk zurück an die Erntemaschine 16 sendet. Ferner können die Sensoreinheit 10 und die Auswerteinheit 14 an einer bestehenden Erntemaschine 24 nachgerüstet werden.

Die Sensoreinheit 10 ist integriert im Lagersitz des Wälzlagers 12. Zumindest ein Teil der Sensoreinheit 10 kann auch in der Welle integriert sein.

Es ist insbesondere denkbar, für eine Programmierung der Auswerteinheit 14 zumindest teilweise das Programm @ptitude decision support zu verwenden.

Prinzipiell ist denkbar, dass das beschriebene Verfahren auch an anderen Wälzlagern der Erntemaschine 24, wie insbesondere an Wälzlagern der Schneidwalze 30 und der Beschleunigungswalze 36 verwendet wird. Dabei kann die Anzeigeeinheit den zustand und/oder eine Schädigungsgefahr von jedem der betreffenden Lager anzeigen. Durch das beschrieben Verfahren können insbesondere auch schädliche Einflüsse von Silagesäften und Staub erkannt bzw. kompensiert werden.

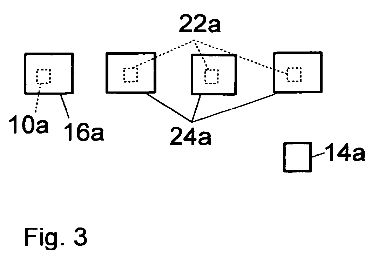

In Figur 3 ist ein alternatives Ausführungsbeispiel dargestellt. Im Wesentlichen gleich bleibende Bauteile, Merkmale und Funktionen sind grundsätzlich mit den gleichen Bezugszeichen beziffert. Zur Unterscheidung der Ausführungsbeispiele sind jedoch den Bezugszeichen der Ausführungsbeispiele in Fig. 3 der Buchstabe die Buchstaben "a" hinzugefügt. Die nachfolgende Beschreibung beschränkt sich im Wesentlichen auf die Unterschiede zu dem Ausführungsbeispiel in den Fig. 1 bis Fig. 2, wobei bezüglich gleich bleibender Bauteile, Merkmale und Funktionen auf die Beschreibung des Ausführungsbeispiels in den Fig. 1 bis Fig. 2 verwiesen werden kann.

Figur 3 zeigt eine Einbindung einer Erntemaschine 16a in ein Steuerungsverfahren, das mehrere Erntemaschinen 16a, 24a betrifft. Bei dem Steuerungsverfahren werden in jeder der als Feldhäcksler ausgebildeten Erntemaschinen 16a, 24a durch die Sensoreinheiten 10a, 22a in oben beschriebener Weise gewonnene Daten eines Wälzlagers 12, welches die betreffende Erntemaschine 16a, 24a aufweist, an eine Auswerteinheit 14a, welche in einem Kontrollzentrum angeordnet ist, geschickt. Die Auswerteinheit 14a analysiert die Daten. Bestehen für Wälzlager 12 verschiedener Erntemaschinen 16a, 24a eine Schädigungsgefahr, so kann die Auswerteinheit 14a diejenigen Erntemaschinen 16a, 24a mit der größten Schädigungsgefahr deaktivieren und diejenigen mit einer zwar vorhandenen aber vergleichsweise geringen Schädigungsgefahr weiter aktiv lassen. Die Erntemaschinen 16a, 24a, die deaktiviert werden, werden also in Abhängigkeit von den Zuständen der Wälzlager in allen Maschinen deaktiviert. Dies ist insbesondere dann vorteilhaft, wenn die Erntemaschinen 16a, 24a dasselbe Feld bearbeiten und das Feld in einer bestimmten Zeit vollständig bearbeitet sein muss.

Es ist denkbar, dass die Auswerteinheit 14a die an sie gesendeten Daten speichert, so dass diese bei einer Neukonstruktion der Erntemaschinen berücksichtigt werden können. Dadurch kann vermieden werden, dass eine zu konservative Konstruktionsauslegung zu einer ineffizienten Maschinennutzung führt. Ferner kann durch das Speichern der Daten eine Planung von Wartungsarbeiten nutzungsabhängig erfolgen.

**Bezugszeichenliste**

| | |
|---|---|
| 10 | Sensoreinheit |
| 12 | Wälzlager |
| 14 | Auswerteinheit |
| 16 | Erntemaschine |
| 18 | Breite |
| 20 | Gutbeförderungskanal |
| 22 | Sensoreinheit |
| 24 | Erntemaschine |
| 26 | Häckselwerk |
| 28 | Beförderungskanal |
| 30 | Schneidwalze |
| 32 | Cracker-Walze |
| 34 | Cracker-Walze |
| 36 | Beschleunigerwalze |
| 38 | Cockpit |

**Patentansprüche**

1. Verfahren, insbesondere Erntemaschinensteuerungsverfahren, bei welchem eine Sensoreinheit (10; 10a, 22a) zumindest eine Zustandskenngröße eines Wälzlagers (12) sensiert und Daten des Sensierens an wenigstens eine Auswerteinheit (14; 14a) sendet, welche die Daten analysiert, wobei in Abhängigkeit von wenigstens einem Ergebnis, welches bei dem Analysieren erzielt wird, zumindest ein Verfahrensvorgang gestartet wird, wobei der Verfahrensvorgang wenigstens ein Steuern zumindest eines Betriebsparameters einer Erntemaschine (16; 16a, 24a) ist, welches zusammen mit dem Sensieren der Sensoreinheit (10; 10a, 22a) einen Regelkreis bildet.

2. Verfahren nach Anspruch 1, wobei der zumindest eine Betriebsparameter eine Breite (18) eines Gutbeförderungskanals (20) der Erntemaschine (16; 16a, 24a) und/oder eine Fahrgeschwindigkeit der Erntemaschine (16; 16a, 24a) ist.

3. Verfahren nach einem der vorherigen Ansprüche, wobei der Verfahrensvorgang ein Anzeigevorgang, bei welchem einem Betreiber einer Erntemaschine eine Information über eine Schädigungsgefahr des Wälzlagers (12) angezeigt wird und/oder dem Betreiber wenigstens ein Handlungsvorschlag angezeigt wird, welcher zu einer Senkung einer Schädigungsgefahr des Wälzlagers (12) führt, und/oder dem Betreiber angezeigt wird, wann das Wälzlager (12) voraussichtliche defekt sein wird.

4. Verfahren nach einem der vorherigen Ansprüche, wobei das Verfahren in Echtzeit stattfindet.

5. Verfahren nach einem der vorherigen Ansprüche, wobei die zumindest eine Zustandskenngröße eine Drehzahl des Wälzlagers (12) und/oder wenigstens eine Vibrationsfrequenz des Wälzlagers (12) und/oder eine Temperatur des Wälzlagers (12) und/oder ein an einem Lagerring des Wälzlagers (12) angreifendes Drehmoment ist.

6. Verfahren nach einem der vorherigen Ansprüche, wobei das Wälzlager (12) Teil einer Erntemaschine (16a) ist und weitere Daten von weiteren Sensoreinheiten (22a) in weiteren Erntemaschinen (24a) analysiert werden und in Abhängigkeit von zumindest mehreren Analyseergebnissen zu Daten mehrerer Erntemaschinen (16a, 24a) zumindest ein Signal an wenigstens eine Erntemaschine (16a; 24a) gesendet wird.

7. System, welches insbesondere dazu vorgesehen ist, ein Verfahren nach einem der Ansprüche 1 bis 7 durchzuführen, wobei das System eine Sensoreinheit (10; 10a, 22a) und wenigstens eine Auswerteinheit (14) aufweist, wobei die Sensoreinheit dazu vorgesehen ist, zumindest eine Zustandskenngröße eines Wälzlagers (12) zu sensieren und Daten des Sensierens an wenigstens die Auswerteinheit (14; 14a) zu senden, wobei die Auswerteinheit dazu vorgesehen ist, die Daten zu analysieren und in Abhängigkeit von wenigstens einem Ergebnis, welches bei dem Analysieren erzielt wird, zumindest einen Verfahrensvorgang zu starten, wobei der Verfahrensvorgang wenigstens ein Steuern zumindest eines Betriebsparameters einer Erntemaschine (16; 16a, 24a) ist, welches zusammen mit dem Sensieren der Sensoreinheit (10; 10a, 22a) einen Regelkreis bildet.

8. System nach Anspruch 7, wobei das System zumindest einen Teil einer Erntemaschine (16a) aufweist, welcher das Wälzlager (12) aufweist, und das System einen weiteren Teil aufweist, welcher sich von einem Teil einer Erntemaschine unterscheidet und welcher die Auswerteinheit (14a) aufweist.

9. Erntemaschine, insbesondere Feldhäcksler,welche das System nach Anspruch 7 aufweist.

## Claims

1. Method, in particular method for controlling a harvesting machine, in which a sensor unit (10; 10a, 22a) senses at least one state characteristic variable of a roller bearing (12) and transmits data of the sensing process to at least one evaluation unit (14; 14a) which analyses the data, wherein at least one method procedure is started as a function of at least one result which is achieved during the analysis, wherein the method procedure is at least controlling at least one operating parameter of a harvesting machine (16; 16a, 24a) which, together with the sensing process of the sensor unit (10; 10a, 22a), forms a control loop.

2. Method according to Claim 1, wherein the at least one operating parameter is a width (18) of a material conveying duct (20) of the harvesting machine (16; 16a, 24a) and/or a velocity of the harvesting machine (16; 16a, 24a).

3. Method according to one of the preceding claims, wherein the method procedure is a display procedure in which information about risk of damage to the roller bearing (12) is displayed to an operator of a harvesting machine and/or at least one handling proposal is displayed to the operator, which handling proposal leads to a reduction of a risk of damage to the roller bearing (12), and/or is displayed to the operator when the roller bearing (12) is expected to become defective.

4. Method according to one of the preceding claims, wherein the method takes place in real time.

5. Method according to one of the preceding claims, wherein the at least one state characteristic variable is a rotational speed of the roller bearing (12) and/or at least a vibrational frequency of the roller bearing (12) and/or a temperature of the roller bearing (12) and/or a torque which engages on a bearing ring of the roller bearing (12).

6. Method according to one of the preceding claims, wherein the roller bearing (12) is part of a harvesting machine (16a), and further data from further sensor units (22a) is analysed in further harvesting machines (24a), and at least one signal is transmitted to at least one harvesting machine (16a; 24a) as a function of at least a plurality of analysis results relating to data of a plurality of harvesting machines (16a, 24a).

7. System which is provided, in particular, for carrying out a method according to one of Claims 1 to 7, wherein the system has a sensor unit (10; 10a, 22a) and at least one evaluation unit (14), wherein the sensor unit is provided for sensing at least one state characteristic variable of a roller bearing (12) and for transmitting data of the sensing process to at least the evaluation unit (14; 14a) wherein the evaluation unit is provided for analysing the data and starting at least one method procedure as a function of at least one result which is achieved during the analysing process, wherein the method procedure is at least controlling at least one operating parameter of a harvesting machine (16; 16a, 24a), which operating parameter forms, together with the sensing process of the sensor unit (10; 10a, 22a), a control loop.

8. System according to Claim 7, wherein the system has at least part of a harvesting machine (16a), which part has the roller bearing (12), and the system has a further part which differs from a part of a harvesting machine and which has the evaluation unit (14a).

9. Harvesting machine, in particular field chopper, which has the system according to Claim 7.

**Revendications**

1. Procédé, notamment procédé de commande d'une moissonneuse, lors duquel une unité de capteurs (10 ; 10a, 22a) détecte au moins une caractéristique d'état d'un palier à roulement (12) et envoie des données de la détection à au moins une unité d'évaluation (14 ; 14a), laquelle analyse les données, en fonction d'au moins un résultat, lequel est obtenu lors de l'analyse, au moins une opération de procédé étant démarrée, l'opération de procédé étant au moins une commande d'au moins un paramètre de service d'une moissonneuse (16 ; 16a, 24a), laquelle ensemble avec la détection de l'unité de capteurs (10 ; 10a, 22a) forme un circuit de régulation.

2. Procédé selon la revendication 1, l'au moins un paramètre de service étant une largeur (18) d'un canal (20) de transport de produits de la moissonneuse (16 ; 16a, 24a) et/ou une vitesse de conduite de la moissonneuse (16 ; 16a, 24a).

3. Procédé selon l'une quelconque des revendications précédentes, l'opération de procédé étant une opération d'affichage, lors de laquelle une information au sujet d'un risque de détérioration du palier à roulement (12) est affichée à l'attention d'un exploitant de la moissonneuse et/ou il est affiché à l'attention de l'exploitant au moins une proposition d'intervention tendant à diminuer le risque de détérioration du palier à roulement (12) et/ou il est affiché à l'attention de l'exploitant à quel moment il est prévisible que le palier à roulement (12) sera défectueux.

4. Procédé selon l'une quelconque des revendications précédentes, le procédé se déroulant en temps réel.

5. Procédé selon l'une quelconque des revendications précédentes, l'au moins une caractéristique d'état étant une vitesse de rotation du palier à roulement (12) et/ou au moins une fréquence de vibration du palier à roulement (12) et/ou une température du palier à roulement (12) et/ou un couple de rotation appliqué sur une bague de palier du palier à roulement (12).

6. Procédé selon l'une quelconque des revendications précédentes, le palier à roulement (12) étant une pièce d'une moissonneuse (16a) et des données supplémentaires étant analysées par des unités de capteurs (22a) dans des moissonneuses (24a) supplémentaires et en fonction d'au moins plusieurs résultats d'analyses de données de plusieurs moissonneuses (16a, 24a) au moins un signal étant envoyé à au moins une moissonneuse (16a ; 24a).

7. Système, lequel est prévu notamment pour réaliser un procédé selon l'une quelconque des revendications 1 à 7, le système comportant une unité de capteurs (10 ; 10a, 22a) et au moins une unité d'évaluation (14), l'unité de capteurs étant prévue pour détecter au moins une caractéristique d'état d'un palier à roulement (12) et pour envoyer des données de la détection à au moins une unité d'évaluation (14 ; 14a), l'unité d'évaluation étant prévue pour analyser les données et en fonction d'au moins un résultat, lequel est obtenu lors de l'analyse, pour démarrer au moins une opération de procédé, l'opération de procédé étant au moins une commande d'au moins un paramètre de service d'une moissonneuse (16 ; 16a, 24a), laquelle ensemble avec la détection de l'unité de capteurs (10 ; 10a, 22a) forme un circuit de régulation.

8. Système selon la revendication 7, le système comportant au moins une partie de la moissonneuse (16a), laquelle comporte le palier à roulement (12) et le système comportant une partie supplémentaire qui se différencie d'une partie d'une moissonneuse et laquelle comporte l'unité d'évaluation (14a).

9. Moissonneuse, notamment ramasseuse-hacheuse, laquelle comporte le système selon la revendication 7.

Fig. 1

Fig. 2

22a

10a 16a

24a

14a

Fig. 3

**IN DER BESCHREIBUNG AUFGEFÜHRTE DOKUMENTE**

**In der Beschreibung aufgeführte Patentdokumente**

- EP 1495669 A1